# EUROPÄISCHE PATENTSCHRIFT

(11) **EP 0 679 250 B1**
(45) Veröffentlichungstag und Bekanntmachung des Hinweises auf die Patenterteilung: **15.03.2000**
(21) Anmeldenummer: 95900731.1
(22) Anmeldetag: 14.11.1994
(51) Int. Cl.: G01N 21/55, G01N 21/77

(54) **ANORDNUNG ZUR ANALYSE VON SUBSTANZEN AN DER OBERFLÄCHE EINES OPTISCHEN SENSORS**
SYSTEM FOR ANALYSING SUBSTANCES AT THE SURFACE OF AN OPTICAL SENSOR
SYSTEME PERMETTANT D'ANALYSER DES SUBSTANCES A LA SURFACE D'UN DETECTEUR OPTIQUE

(30) Priorität: 15.11.1993 DE 4338894; 22.09.1994 DE 4433753
(43) Veröffentlichungstag der Anmeldung: 02.11.1995
(73) Patentinhaber: CARL ZEISS JENA GmbH, 07745 Jena (DE); F. Hoffmann-La Roche AG, 4002 Basel (CH); Schott Glas, 55122 Mainz (DE); Carl-Zeiss-Stiftung trading as Schott Glas, 55122 Mainz (DE)
(72) Erfinder: FATTINGER, Christof, CH-4223 Blauen (CH); DANIELZIK, Burkhard, D-55218 Ingelheim (DE); GRÄFE, Dieter, D-07745 Jena (DE); HEMING, Martin, D-55291 Saulheim (DE); LENTES, Frank-Thomas, D-55411 Bingen (DE)
(74) Vertreter: Geyer, Werner, Dr.-Ing.
(86) Internationale Anmeldenummer: EP9403769
(87) Internationale Veröffentlichungsnummer: WO9514225

(56) Entgegenhaltungen:
- EP-A- 0 482 377
- WO-A-93/01487

## Beschreibung

Die Erfindung betrifft eine Anordnung zur Analyse von Substanzen an oder nahe der Oberfläche eines optischen Sensors gemäß dem Oberbegriff des Patentanspruchs 1.

Solche Anordnungen werden nach dem Stand der Technik zur Analyse von Substanzen an oder nahe der Sensor-Oberfläche eingesetzt und finden vielfältige Anwendung bei der Bestimmung physikalischer und chemischer Meßgrößen (Lit. [3] - [5], [10], [11]). Die Wirkungsweise der Sensoren beruht auf der Wechselwirkung der geführten Lichtwellen mit dem Medium an und nahe der Sensor-Oberfläche. Auf dieser Basis sind solche Sensoren in Kombination mit einer Anordnung zum Betrieb als universelles Spektrometer einsetzbar, da Brechzahl und Absorption des Mediums in der Nähe der Sensor-Oberfläche bestimmbar sind. Bekannt sind auch Anwendungen in der Affinitäts-Sensorik (Lit. [5]); hier binden die nachzuweisenden Moleküle selektiv an die Sensoroberfläche und werden über die Wechselwirkung mit der geführten Welle nachgewiesen.

Der Einsatz eines oder mehrerer Gitterkoppler zum Ein- und/oder Auskoppeln der geführten Wellen ist Stand der Technik (Lit. [1,2]).

In Lit. [8] ist die Verwendung eines Gitterkopplers zur Einkopplung beschrieben. Die bei Erreichen der Resonanz auftretenden geführten Wellen werden durch Detektion des seitlich aus dem Wellenleiter austretenden Lichts nachgewiesen. Dieses Verfahren stellt hohe Anforderungen an die Planarität des Wellenleiters und die Genauigkeit der Winkelverstellung, was für eine wirtschaftlich günstige Anwendung von Nachteil ist.

Auch die in Lit. [6] beschriebene Ausführung dieses Verfahrens mit Bestimmung des Autokollimationswinkels erfordert eine sehr genaue mechanische Winkelverstellung.

Eine Winkelverstellung kann entfallen, wenn ein Gitter zur Auskopplung verwendet wird und die austretende Strahlung auf einen oder zwei ortsempfindliche Detektoren geführt wird, wie dies in Lit. [7] beschrieben ist. Bei diesem Verfahren ist jedoch eine Einkopplung der geführten Wellen über die Endfläche des Wellenleiters erforderlich. Dies ist wegen der notwendigen Präparation der Endflächen sowie der Genauigkeit der Positionierung des Senders bei der Einkopplung von Nachteil. Auch bei der in Lit. [14] beschriebenen Ausführung dieses Verfahrens sind diese Nachteile anzuführen. Weiterhin ist bei dem Verfahren nach Lit. [14] die Einkopplung von zwei Lichtquellen aus unterschiedlichen Richtungen nötig. Damit wird der Aufwand für die Endflächen-Kopplung noch erhöht. Darüber hinaus ist der Einfluß von Temperatur-Veränderungen auf die Meßwerterfassung von Nachteil, wenn die geführten Wellen den Sensor in unterschiedlicher Richtung durchlaufen.

Ein Spektrometer auf der Basis von optischen Wellenleitern mit Gitterkopplern wird in Lit. [9,13] beschrieben. Bei diesem Verfahren werden Änderungen der Absorptionseigenschaften an der Wellenleiter-Oberfläche verschiedener Wellenlänge bestimmt.

Eine bekannte, vorteilhafte Ausführung eines Gitterkopplers ist der multi-diffraktive Koppler (Lit. [1]), speziell der bidiffraktive Koppler (Lit. [15]). Mit einem solchen Verfahren können die ausgekoppelten Wellen hintergrundfrei detektiert werden.

Es ist auch bekannt (Lit. [7]), zum Nachweis chemischer Substanzen eine die nachzuweisende Substanz enthaltende Probe mit der wellenleitenden Schicht eines optischen Schichtwellenleiters in Kontakt zu bringen, kohärentes Licht in die wellenleitende Schicht einzukoppeln, als Lichtwelle in diesem zu führen und wieder aus der Schicht auszukoppeln, wobei in der Ebene der wellenleitenden Schicht ein Beugungsgitter zum Ein- und Auskoppeln des Lichts vorgesehen ist.

Es können zwei kohärente (z.B. orthogonal polarisierte) Lichtstrahlen simultan in den Schichtwellenleiter eingekoppelt werden und durch Interferenz von zwei ausgekoppelten Teilstrahlen, die von den beiden im Wellenleiter gemeinsam geführten (z.B. orthogonal polarisierten) Lichtwellen erzeugt werden, die relative Phasenlage in Form einer Phasendifferenz der beiden eingekoppelten Lichtfelder gemessen bzw. die relative Intensität der ausgekoppelten Lichtfelder bestimmt werden (Lit. [11]).

Mit Gitterkopplern läßt sich ein kohärentes Lichtfeld auf einfache Weise in einen Wellenleiter ein- bzw. auskoppeln, wobei man ohne eine fokussierende Optik auskommt. Das Lichtfeld wird eingekoppelt, wenn es unter einem bestimmten, von der Gitterperiode und der effektiven Modenbrechzahl abhängenden Einfallswinkel auf die mit dem Gitterkoppler versehene Region des Wellenleiters auftrifft. Wird die Ein- und Auskopplung mit einer sogenannten multidiffraktiven Gitterstruktur vorgenommen, können die Beugungswinkel und die Intensitäten der einzelnen Beugungsordnungen unabhängig voneinander variiert werden. Der im Wellenleiter geführte, ausgekoppelte Teilstrahl kann von reflektierten, transmittierten oder direkt gebeugten Teilstrahlen separiert werden, obwohl die Regionen auf der wellenleitenden Schicht, in denen das Ein- und Auskoppeln der Lichtfelder erfolgt, teilweise überlappen.

Mögliche Ausführungsformen für den Sensor sind in Lit. [11,16] beschrieben. In den Sensor sind zwei Lichtfelder einzukoppeln, abhängig von der Ausführung mit unterschiedlicher oder gleicher Polarisation.

In Lit. [12] wird ein Verfahren beschrieben, in dem ein in den Sensor integriertes Gitter sowohl zur Ein- als auch zur Auskopplung dient. Hierfür sind ein fächerförmiges Lichtfeld zur Einkopplung sowie eine mechanische Blende im Auskoppelstrahlengang zur Unterdrückung des reflektierten Lichts notwendig. Von Nachteil ist hier die notwendige Positionierungs-Genauigkeit der Blende, die von der Flächennormalen stark abweichenden Ein- und Auskoppelrichtungen sowie die stark unterschiedliche Beugungsintensität in den verschiedenen Ordnungen der geführten Wellen. Beschrieben wird in Lit. [12] auch die Verwendung eines nach der Linse angeordneten Planspiegelsystems vor dem Detektor zur Verringerung der Baulänge.

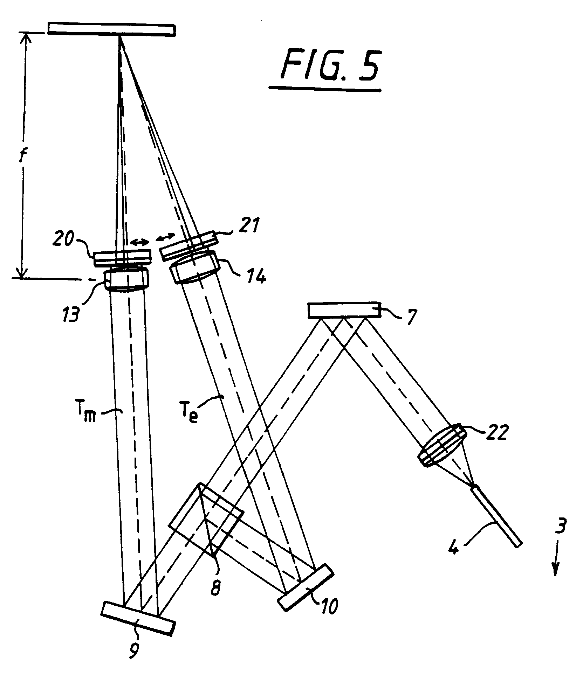

Des weiteren wird insbesondere in Fig. 5 von Lit. [12] die Einkopplung von zwei fächerförmigen Lichtfeldern in einem bestimmten Winkel zueinander in ein auf einem Sensor integriertes Gitter gezeigt. Jedem eingekoppelten fächerförmigen Lichtfeld ist ein ausgekoppeltes gebeugtes fächerförmiges Lichtfeld zugeordnet, wobei die beiden ausgekoppelten gebeugten fächerförmigen Lichtfelder einen zweiten bestimmten Winkel einschließen, der kleiner als der Winkel, den die eingekoppelten Lichtfelder einschließen, ist. Beide Einkopplungswinkel der eingekoppelten Lichtfelder sind gleich groß und symmetrisch zueinander in einer von den ein- und ausgekoppelten Lichtfeldern aufgespannten Ebene angeordnet. Ebenso sind die Auskopplungswinkel der ausgekoppelten Lichtfelder gleich groß und liegen symmetrisch zueinander in der von eingekoppelten und ausgekoppelten Lichtfeldern aufgespannten Ebene. Bedingt durch diese symmetrische Anordnung der Ein- und Auskopplungswinkel liegt ein ausgekoppeltes Lichtfeld immer in einem Quadranten eines nicht zugehörigen eingekoppelten Lichtfeldes. Dadurch kann eine Beeinflussung der Detektion eines ausgekoppelten Lichtfeldes durch Streustrahlen oder weitere Beugungsordnungen des eingekoppelten Lichtfeldes, denen das ausgekoppelte Lichtfeld nicht zugeordnet ist, stattfinden.

Lit. [17] offenbart einen optischen Sensor mit einer integrierten optischen Anordnung mit einem Wellenleiter und einem Beugungsgitter. Zur Messung der Änderung der effektiven Brechzahl des Wellenleiters wird ein Einkoppel-Lichtstrahlbündel oder ein konvergenter Lichtkegel verwendet. Dieses Einkoppel-Lichtstrahlbündel oder der konvergente Lichtkegel überdeckt einen zum Beugungsgitter passenden Einkoppel-Lichtstrahl. Eine Meßeinrichtung dient zur Messung des Auskopplungswinkels eines im Bereich des Beugungsgitters reflektierten Auskoppel-Lichtstrahles. Somit erfolgt in dem optischen Sensor gemäß Lit. [17] nicht die Messung eines Winkels, der von zwei eingekoppelten Lichtstrahlen eingeschlossen wird, und im Verhältnis dazu die Messung eines Winkels, der von zwei ausgekoppelten Lichtstrahlen eingeschlossen wird, weshalb auch keine Winkelseparation der ein- und ausgekoppelten Lichtstrahlen möglich ist.

Ausgehend hiervon liegt der Erfindung liegt die Aufgabe zugrunde, eine Anordnung der eingangs genannten Art so weiterzubilden, daß mit ihr eine Winkelseparation der ein- und ausgekoppelten Strahlen sowie eine Trennung der ausgekoppelten Strahlen von am Sensor reflektierten Strahlen erzielt wird.

Diese Aufgabe wird gelöst durch eine Anordnung zur Analyse zur Substanzen an oder nahe der Oberfläche eines optischen Sensors mit mindestens einer wellenleitenden Schicht und mindestens einem multidiffraktiven Gitterkoppler zur Ein- und Auskopplung von Lichtstrahlen, in den mindestens zwei Lichtstrahlen eingekoppelt werden, die zueinander einen Winkel α einschließen, mit einem Detektionssystem, das zwei aus dem Gitterkoppler ausgekoppelte, einen Winkel ϕ einschließende Lichtstrahlen erfaßt, wobei α größer als ϕ ist und Ein- und Auskopplung auf ein- und derselben Seite des Sensors erfolgen, wobei die Einkopplung der mindestens zwei Lichtstrahlen in einem Quadranten der Lichteinfallsebene erfolgt und das Detektionssystem diejenigen beiden ausgekoppelten Lichtstrahlen erfaßt, die in dem anderen Quadranten liegen.

Bevorzugte Ausgestaltungen der Erfindung sind in den Unteransprüchen beschrieben.

Die ausgekoppelten Strahlen sind nach langen Strahlenwegen winkelmäßig separiert und gut auswertbar. Lange Strahlenwege werden vorzugsweise durch Faltung erzeugt.

Überraschend stellte sich heraus, daß die erfindungsgemäßen Winkelkonfiguration, insbesondere bei kleinen Differenzen der Winkel der ausgekoppelten Strahlen, besonders unempfindlich gegen leichte Verkippungen des Sensors um die Horizontalebene ist, was vor allem bei einem Sensorwechsel von großer Bedeutung ist.

Die Winkelverstellung wird bevorzugt durch leichte Strahlkonvergenz der eingekoppelten Strahlen deutlich erleichtert.

Ein weiterer Vorteil der erfindungsgemäßen Anordnung ist die kompakte Ausführung des Strahlführungssystems in einem integrierten Modul, in dem alle zur Verwendung des Sensors notwendigen Lichtstrahlen eingekoppelt, ausgekoppelt und detektiert werden können.

Die ermöglichte Miniaturisierung ist auch aus Gründen der Stabilität gegen Umwelteinflüsse vorteilhaft (z. B. thermische Effekte, Vibrationen).

Als Lichtquelle kommt vorzugsweise eine Halbleiter-Laserdiode oder eine Superlumineszenz-Diode zum Einsatz, da diese direkt in den Auslesekopf integriert werden können. Beim Einbau ist eine Montage an der Außenseite eines die übrige Anordnung enthaltenden Gehäuses besonders bevorzugt, so daß bei einem Defekt der Lichtquelle die Halbleiter-Einheit ohne Öffnen des Gehäuses ausgetauscht werden kann. Besonders vorteilhaft ist die Ausführung der Strahlungsdiode zusammen mit den notwendigen Einheiten zur Stabilisierung von Wellenlänge und Leistung (z.B. Referenz-Diode, Temperaturstabilisierung) in einem gemeinsamen Gehäuse. Dadurch kann die Temperaturstabilisierungs-Einheit mit geringer Wärmekapazität ausgeführt werden so daß eine preiswerte Ausführung der notwendigen Versorgungs-Elektronik ausreicht. Alternativ zu einer Laser- oder Superlumineszenz-Diode kann vorzugsweise auch eine andere kohärente Lichtquelle zum Einsatz kommen, z.B. ein He-Ne-Laser. Um unabhängig von den Dimensionen der Lichtquelle die kompakte Bauform des Auslesekopfes beibehalten zu können, wir das Licht in diesem Fall dem Auslesekopf vorzugsweise über einen Lichtleiter zugeführt. Bei Einsatz einer Lichtquelle mit Lichtleiter-Zuführung an den Auslesekopf ist bei Verwendung einer Standard-Lichtleiterkupplung auch ein schneller Wechsel der Lichtquelle und der Wellenlänge möglich.

Ein Teil der für die Strahlformung notwendigen optischen Elemente kann vorzugsweise direkt in das Gehäuse der Laser- bzw. Superlumineszenz-Diode integriert werden oder auch alternativ in die Steckkupplung für den Lichtleiter. Darüber hinaus können noch weitere Elemente zur Anpassung der Strahlparameter innerhalb eines die Anordnung enthaltenden Gehäuses angebracht werden, so auch hinter dem Strahlteiler. Durch die Verwendung zylindrischer Einheiten mit unterschiedlicher Brennweite senkrecht und parallel zur Einfallsebene sind z.B. auch astigmatische Strahlprofile realisierbar.

Die Aufteilung auf zwei unabhängige Lichtfelder zur Einkopplung der geführten Wellen in den Sensor erfolgt vorzugsweise durch einen Strahlteiler, z.B. in Form eines teildurchlässigen Spiegels oder eines holografischen Elements. Ein holografisches Element hat den Vorteil, daß beim nachfolgenden Strahlführungs-System Spiegel-Elemente eingespart werden können. Das Strahlführungs-System besteht aus mehreren Spiegeln, die das Licht für beide einzukoppelnden Lichtstrahlen der Anordnung auf den Sensor leiten. Alternativ kann die Strahlteilung vorzugsweise durch ein Glasfaser-Verzweigungs-Element realisiert werden.

Die Einstellung der Strahlparameter beider einzukoppelnden Lichtstrahlen in der Sensorebene erfolgt durch eine fokussierende Optik. Dabei können für die Fokussierung der beiden einzukoppelnden Lichtfelder bevorzugt eine gemeinsame Optik oder zwei separate Optiken eingesetzt werden. Durch die Verwendung zylindrischer Optiken sind unterschiedliche Strahlparameter senkrecht und parallel zur Einfallsebene realisierbar.

Zum Betrieb des optisch-wellenleitenden Sensors sind die Einkoppelbedingungen für beide einzukoppelnden Lichtfelder einzuhalten. Diese sind durch die effektiven Modenbrechzahlen der geführten Wellen und die verwendeten Perioden des Gitterkopplers festgelegt.

Änderungen der Einkoppelwinkel sind wegen der limitierten Chip-to-Chip Reproduzierbarkeit des Sensors notwendig, weiterhin bei Änderung der effektiven Modenbrechzahlen, bedingt durch Substanzen in der Nähe der Sensoroberfläche. Die Verstellung der Einkoppelwinkel kann vorzugsweise durch Einbringen einer ortsveränderlichen Spaltblende in den jeweiligen Einkoppelstrahlengang durchgeführt werden. Eine Bewegung der Blende innerhalb der Einfallsebene läßt aus dem durch die Strahldivergenz vorgegebenen Winkelbereich einen Einkoppelwinkel auswählen. Alternativ zu einer mechanisch linear bewegten Spaltblende kann bevorzugt ein Filter mit räumlich variabler Transmission eingesetzt werden.

Besonders vorteilhaft läßt sich diese Blende durch ein Flüssigkristall-Element mit zeilenförmig angeordneten, stabförmigen Bildelementen, in Zeilenrichtung innerhalb der Einfallsebene, realisieren: Die jeweils transmittierenden Bildelemente definieren den Einkoppelwinkel. Bei dieser Lösung sind keine bewegten Teile für die Winkeleinstellung notwendig. Die Verstellung der Koppelwinkel ist für die beiden eingekoppelten Lichtstrahlen unabhängig vorzunehmen; dazu können vorzugsweise zwei separate oder ein gemeinsames Element zum Einsatz kommen. Bei Verwendung eines gemeinsamen Elementes sind unterschiedlich ansteuerbare Bereiche für die beiden eingekoppelten Lichtstrahlen vorzusehen; vorteilhaft für die Miniaturisierung und einen einfachen Aufbau ist hier, daß nur eine Halterung notwendig ist.

Vorzugsweise werden die LCD-Einheiten in der Nähe des Fokussierungs-Elemente positioniert: damit können Abweichungen des Strahlprofils in der Sensorebene von einer Gaußverteilung minimal gehalten werden. Vorteilhaft für ein Gauß-ähnliches Strahlprofil ist weiterhin, bei den stabförmigen Bildelementen der Flüssigkristall-Einheit mehr als zwei verschiedene Transmissionswerte einzustellen. Durch eine solche abgestufte Transmissions-Charakteristik können die durch Beugung an der Blende bedingten Nebenmaxima in der Sensorebene reduziert werden.

Alternativ zu den LCD-Einheiten können auch einfache mechanische Verstelleinheiten verwendet werden.

Besonders vorteilhaft sind schwenkbare planparallele Glasquader als strahlversetzende Einheiten, deren Strahlversatz nach Durchlaufen eines Abbildungselementes zu einer Strahlrichtungsänderung führt.

Für eine einfache und preiswerte Realisierung der erfindungsgemäßen Anordnung ist eine Ausführungsform vorteilhaft, bei der die zur Verstellung der Einkoppelwinkel notwendigen LCD- oder mechanischen Elemente vollständig entfallen können. Voraussetzung für diese einfache Ausführung ist, daß durch enge Toleranzen des Sensors sowie beschränkte Änderungen der effektiven Modenbrechzahlen beim Betrieb des Sensors sichergestellt wird, daß mögliche Änderungen der Einkoppelwinkel innerhalb des Konvergenzwinkels der einfallenden Lichtfelder liegen. Bei optisch-wellenleitenden Sensoren mit einem oder mehreren integrierten optischen Beugungsgittern definiert die Ausrichtung der Gitterlinien die Ausbreitungsrichtung der geführten Wellen. Zusammen mit der Wahl eines Ortes für die Einkopplung wird dadurch die Einfalls- und Ausfallsebene für die ein- und ausgekoppelten Lichtfelder festgelegt.

Die Ein- und Auskopplung von Licht auf der der Sensoroberfläche abgewandten Seite des Wellenleiters ist besonders vorteilhaft, weil damit das Heranführen der zu analysierenden Substanz an die Sensoroberfläche stark vereinfacht wird. Die Anordnung zum Betrieb des Sensors kann somit einfach von der Vorrichtung zum Heranführen der Substanzen getrennt werden. Besonders vorteilhaft ist es ferner, wenn die ein- und ausgekoppelten Lichtstrahlen in unterschiedlichen Quadranten der Ein- und Auskoppelebene geführt werden.

In einer Ausführungsform der erfindungsgemäßen Anordnung werden die ausgekoppelten Lichtfelder mit einem abbildenden System auf einen ortsauflösenden Empfänger geführt. Die Abbildung ist vorteilhaft, da sich geringe Richtungsänderungen der ausgekoppelten Lichtstrahlen nicht auf die Meßgröße auswirken. Für diese Abbildung können vorzugsweise eine oder mehrere Linsen oder Spiegel verwendet werden. Die Ausführung mit einem abbildenden Element ist besonders einfach.

Bei Verwendung von zwei oder mehreren abbildenden Elementen, vorzugsweise als doppelte Kollimatoranordnung, können Teilbereiche des Strahlengangs mit im wesentlichen parallelem Licht realisiert werden, wobei dort Filterelemente vorteilhafterweise eingebracht werden können. Besonders vorteilhaft ist die erfindungsgemäße Kombination aus Faltung und Abbildung über abbildende Spiegel. Die teleskopische, vorzugsweise telezentrische Ausführung des Abbildungssystems ist vorteilhaft, da auf diese Art eine geringe Empfindlichkeit bezüglich Abstandsänderungen zwischen Sensor und Anordnung erzielt werden kann. Diese Abbildung kann hierbei durch sphärische, asphärische oder zylindrische Spiegel oder ihre Kombination erzeugt werden.

Der Abbildungsmaßstab kann senkrecht und parallel zur Ausfallsebene unterschiedlich gewählt werden. Der Maßstab in der Ausfallsebene ist auf die Ortsauflösung des Detektors abzustimmen, der Maßstab senkrecht zur Ausfallsebene auf die Höhe der Bildelemente des Detektors. Da Änderungen des Abbildungsmaßstabs parallel zur Ausfallsebene die Genauigkeit der Meßwerterfassung vermindern, wird bei der Auswahl der Materialien für den Auskoppelstrahlengang ein Abgleich der thermischen Ausdehnung der einzelnen Bauelemente bevorzugt. Durch diese homologe Ausdehnung wird eine optimale Temperaturstabilität des Abbildungsmaßstabs erreicht. Die für die Abbildung notwendigen Elemente können vorzugsweise als Spiegel, Linsen, Fresnel-Linsen oder holografische optische Elemente ausgeführt werden. Eine Auswertung der Phasendifferenz zwischen TE- und TM-Mode der im Sensor geführten und ausgekoppelten Wellen mit Hilfe eines ortsauflösenden Detektors erfordert, wie bereits vorgeschlagen, das Einbringen eines polarisierenden Elements, z.B. eines Polarisationsfilters, in den Auskoppelstrahlengang, um die beiden Moden zur Interferenz zu bringen.

Alternativ zur Phasendifferenz-Bestimmung können mit den ausgekoppelten Lichtfeldern auf dem ortsauflösenden Detektor Absorptionsmessungen durchgeführt werden. Bei dieser Meßmethode erlaubt die Messung der Dämpfungseigenschaften der geführten Welle Rückschlüsse auf Substanzen nahe der Sensoroberfläche.

In diesem Fall kann das ausgekoppelte Licht für einen der beiden Moden der geführten Welle ausgemessen werden. Während der Messung ist jeweils nur ein Mode eingekoppelt. Es sind jedoch auch Relativmessungen bei Einkopplung und Messung beider Moden möglich.

Eine besonders einfache Messung der Phasendifferenz zwischen TE- und TM-Mode ist möglich, falls statt der Abbildung auf einen ortsauflösenden Detektor eine Fokussierung der ausgekoppelten Lichtstrahlen auf einen oder mehrere ortsempfindliche Detektoren (PSD) erfolgt. Dabei erzeugt der TE- und TM-Mode je einen Fokus in der Detektorebene. Gemessen wird der Abstand der beiden Foki.

Dieses Meßprinzip hat den Vorteil, daß Richtungsänderungen der ausgekoppelten Lichtstrahlen, welche durch kleine Verkippungen des Sensors hervorgerufen werden, keinen Einfluß auf die Meßgröße haben.

Durch Verwendung von PSD's ist eine einfachere und preiswertere Realisierung der erfindungsgemäßen Anordnung möglich, da sowohl die Kosten für die Detektoren als auch für die notwendige Elektronik deutlich geringer sind als für die Ausführung mit ortsauflösenden Detektoren. Mit diesem reduzierten Aufwand läßt sich nur eine gegenüber der ortsauflösenden Ausführung reduzierte Empfindlichkeit realisieren.

Bei Verwendung eines einzelnen PSDs ist zur Messung der Phasendifferenz von TE- und TM-Mode eine alternierende Einkopplung der beiden Lichtfelder notwendig. Dies erfordert eine der oben beschriebenen Möglichkeiten zur Verstellung der Einkoppelwinkel, so daß wahlweise die Einkoppelbedingung nur für einen der beiden Moden erfüllt wird. Bei Verwendung von mehr als einer PSD-Einheit kann durch die Dimensionierung des Gitterkopplers sichergestellt werden, daß die ausgekoppelten Lichtfelder auf verschiedenen PSDs liegen. In diesem Fall kann kontinuierlich für beide Moden der Abstand der Schwerpunkte der beiden Foki gemessen werden, so daß keine Zeitdifferenzen bei der Messung, z.B. durch das Umschalten der Einkopplung, auftreten.

Die zur Fokussierung notwendigen Elemente können, wie oben beschrieben, als abbildende Spiegel, als Linsen, Fresnel-Linsen oder holografische optische Elemente ausgeführt werden Verschiedene Brennweiten der Fokussierung parallel und senkrecht zur Einfallsebene des Detektors können zweckmäßig eingesetzt werden, um einen für die räumliche Auflösung des Detektors optimalen Durchmesser des Strahlflecks einzustellen.

Alle oben beschriebenen Ausführungsformen der erfindungsgemäßen Anordnung bieten gegenüber dem Stand der Technik den Vorteil, daß die Anforderungen an die Temperatur-Stabilisierung deutlich reduziert sind. Die geführten Wellen durchlaufen den Sensor in derselben Richtung, so daß durch die differentielle Messung der effektiven Modenbrechzahlen Temperaturdrifts in guter Näherung kompensiert werden. Weiterhin sind die Anforderungen an die Positionierung und mechanische Stabilität des Sensors deutlich geringer als bei Gitterkopplern nach dem Stand der Technik, da keine Winkelmessungen der ausgekoppelten Lichtstrahlen relativ zur Wellenleiterebene erfolgen. Ein weiterer Vorteil ist die Unempfindlichkeit gegenüber kleinen Verkippungen des Sensors relativ zur erfindungsgemäßen Anordnung.

Die kompakte Bauweise ist vorteilhaft, weil dadurch eine geringe Empfindlichkeit gegen Temperaturänderungen und Vibrationen erreicht wird und die erfindungsgemäße Anordnung als Modul einfach in Analysensysteme zu integrieren ist.

Darüber hinaus hat die erfindungsgemäße Anordnung speziell bei der Verwendung eines bidiffraktiven Kopplers den Vorteil, daß keine Endflächen-Einkopplung notwendig ist und daß eine kleine Verschiebung des Sensors in der Ebene des Wellenleiters keinen Einfluß auf die Koppeleigenschaften und die Meßwerterfassung hat.

Die Erfindung und weitere Wirkungen und Vorteile werden nachstehend anhand der schematischen Zeichnungen näher erläutert. Es zeigen:
- Fig. 1:: einen Schichtwellenleiter als Bestandteil eines optischen Sensors mit eingekoppelten, ausgekoppelten und reflektierten Strahlungskomponenten;
- Fig. 2:: den gesamten Strahlengang einer erfindungsgemäßen Anordnung;
- Fig. 3:: den Einkoppelstrahlengang bei einer erfindungsgemäßen Anordnung;
- Fig. 4:: eine weitere Ausführung der Einkopplung bei einer erfindungsgemäßen Anordnung;
- Fig. 5:: eine Ausführung der Winkeljustierung der Einkoppelstrahlen bei einer erfindungsgemäßen Anordnung;
- Fig. 6:: eine andere Ausführung der Winkeljustierung bei einer erfindungsgemäßen Anordnung;
- Fig. 7:: den Auskoppelstrahlengang bei Interferenzauswertung;
- Fig. 8:: den Auskoppelstrahlengang mit PSD-Auswertung;
- Fig. 9:: die Einkopplung mit drehbaren strahlversetzenden Einheiten;
- Fig. 10:: einen gemeinsamen Träger für die optische Anordnung, und
- Fig. 11:: eine Variante der Strahlführung bei Absorptionsauswertung.

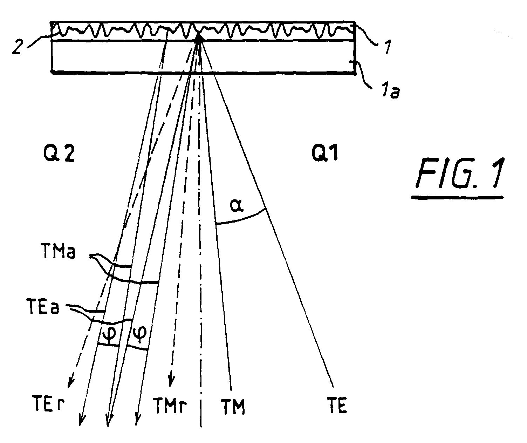

In Fig. 1 ist schematisch ein Schichtwellenleiter 1 auf einem Substrat 1a dargestellt der in bekannter Weise eine bidiffraktive Gitteranordnung 2 trägt. In den Schichtwellenleiter 1 werden zwei kohärente, orthogonal polarisierte Lichtstrahlenbündel Tₑ, Tₘ eingekoppelt, die zueinander einen Winkel α einschießen und in einem ersten Quadranten Q₁ der substratseitigen, von ein- und ausfallenden Lichtstrahlen aufgespannten Ebene liegen.

Die über die Gitteranordnung ausgekoppelten Strahlen Tₑₐ, Tₘₐ liegen im Quadranten Q₂ und schließen zueinander einen Winkel ϕ ein, der deutlich kleiner als der Winkel α ist.
Die ausgekoppelten Strahlen Tₑₐ, Tₘₐ liegen vorteilhaft beide innerhalb eines von den reflektierten Strahlanteilen Tₘᵣ,Tₑᵣ gebildeten Winkelbereiches, wodurch eine Separation der reflektierten Strahlungsanteile von den ausgekoppelten Strahlungsanteilen erreicht wird.
Der Winkel ϕ beträgt bei Interferenzauswertung weniger als 6 Grad, bevorzugt etwa 0,2-3 Grad, und der Winkel α mehr als 6 Grad und liegt vorzugsweise in einem Bereich um 26 Grad plus/minus 20 Grad, besonders vorzugsweise in einem Bereich um 16 plus/minus 10 Grad.

Bei einem Winkel α größer 3 Grad , vorzugsweise 23 plus/minus 20 Grad oder 13 plus/minus 10 Grad,
beträgt ϕ weniger als 3 Grad, vorzugsweise 0.2-3 Grad oder 0.2-2 Grad.

Bei der Messung mittels eines ortsempfindlichen Detektionssystems liegt α oberhalb 2 Grad, vorzugsweise bei 22 plus/minus 20 Grad oder bei 12 plus/minus 10 Grad,
und ϕ bei weniger als 20 Grad, vorzugsweise bei 0-12 Grad oder 0-8 Grad.

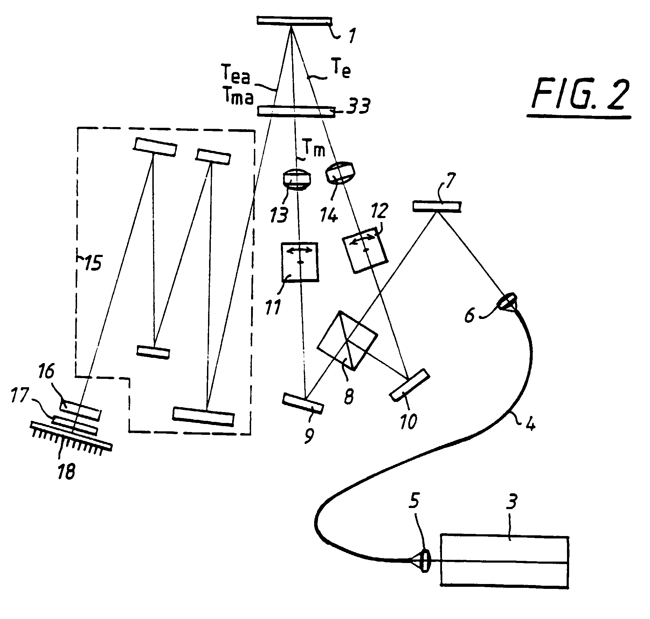

Fig. 2 zeigt eine erfindungsgemäße Gesamtanordnung.
Das Licht einer Laserlichtquelle 3 wird über ein Einkoppelelement 5 in einen Lichtleiter 4 eingekoppelt und gelangt über ein Auskoppel-und Strahlformungselement 6 auf einen ersten Spiegel 7 und von diesem auf einen Polarisationsstrahlteiler 8, der das Licht in zwei Teilstrahlengänge Tₑ und Tₘ aufspaltet, die über Spiegel 9, 10 , strahlversetzende Einheiten 11, 12 sowie Abbildungssysteme 13,14 in den Schichtwellenleiter eingekoppelt werden.
Zwischen der Sensorebene 1 und der übrigen Anordnung ist ein optisches Fenster 33 zum Schutz vor äußeren Einflüssen vorgesehen.

Die Reihenfolge von Fokussierungen 13.14 sowie strahlversetzenden Einheiten 11,12 ist permutierbar. Die Einkoppelwege für die beiden Strahlengänge sind
mit möglichst gleicher Länge auszuführen, abhängig von der
Kohärenzlänge der Lichtquelle. Maximale Differenzen der optischen
Wege für beide Einkoppelstrahlengänge müssen kleiner als die
Kohärenzlänge der Lichtquelle sein, um die Interferenzfähigkeit
der ausgekoppelten Moden sicherzustellen.

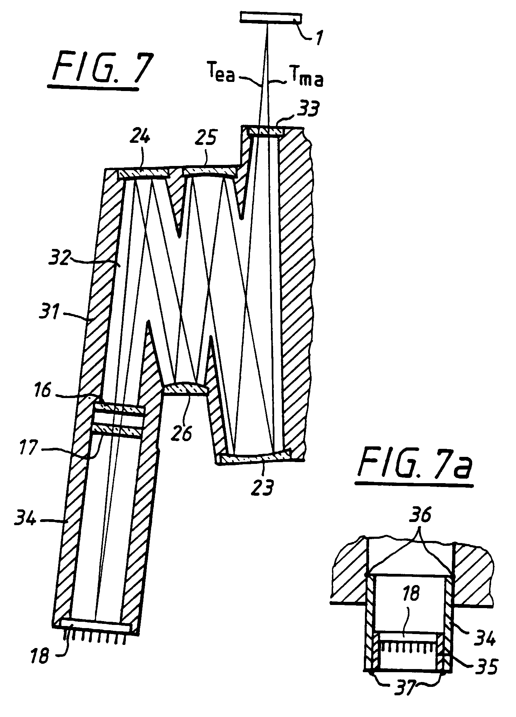

Die ausgekoppelten Strahlmoden Tₑₐ und Tₘₐ werden über eine gestrichelt dargestellte Abbildungseinheit 15, die beispielsweise, wie anhand Fig.7 näher erläutert, aus mehreren abbildenden Spiegeln besteht, einen Polarisator 16 und einen Interferenzfilter 17 auf einen ortsauflösenden Empfänger 18, beispielsweise eine CCD- oder Diodenzeile, abgebildet.

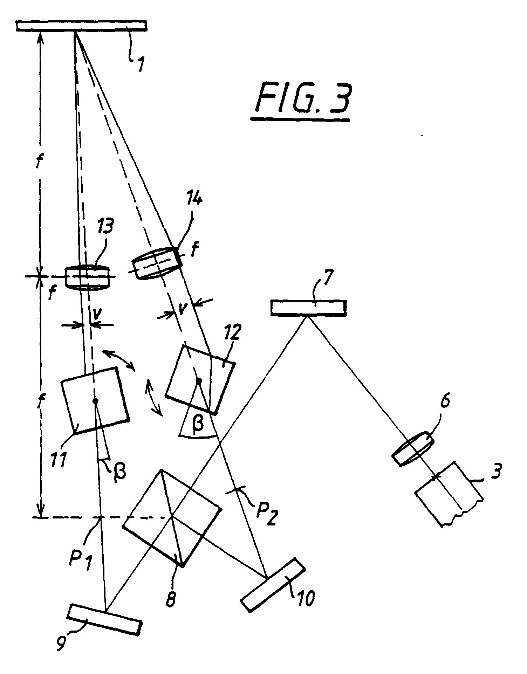

In Fig.3 ist der Einkoppelstrahlengang vergrößert dargestellt.
Der Laserstrahl der Lichtquelle 3 wird mittels des Auskoppelelementes 6 so fokussiert, daß die Strahltaille in den Punkten P₁, P₂ in einem Abstand entsprechend im wesentlicher der Brennweite f von den Abbildungslinsen 13, 14 entfernt liegt.
Die strahlversetzenden Einheiten 11,12 sind vorzugsweise schwenkbare planparallele Glasquader- oder Platten und bewirken in Abhängigkeit von ihrem Drehwinkel β einen Strahlversatz V, der nach Durchlaufen der Linsen 13,14 zu einer Strahlrichtungsänderung führt, wobei der Einkoppelpunkt in der Sensorebene weitgehend stabil bleibt.
Zur Vermeidung störender Reflexionen ist eine leichte Neigung der Drehachsen gegen die Einfallsebene zweckmäßig.
Die eingekoppelten Strahlenbündel weisen dabei eine leichte Konvergenz auf. Die Linsen 13,14 sind hierbei ebenfalls etwa im Abstand f vom Schichtwellenleiter entfernt angeordnet.

Der Strahlteiler 8 ist vorzugsweise als teildurchlässiger Spiegel ausgebildet. Die Strahlteilung kann jedoch auch über einen teildurchlässig beschichteten Strahlteilerwürfel, ein holografisches Element oder ein Glasfaser-Verzweigungselement erfolgen.

Besonders vorteilhaft ist eine (nicht dargestellte) Integration der Srahlumlenkung 7 sowie der Strahlteilung 8 in einem Polygonprisma mit ggf. reflektierenden Flächen oder in einem integriert optischen Element

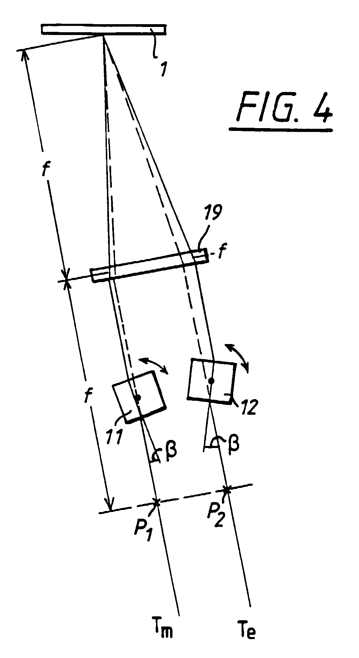

Fig. 4 zeigt eine alternative Ausführungsform zu Fig.3, wobei über eine große Linse 19 beide Strahlkomponenten Tₑ, Tₘ eingekoppelt und in analoger Weise in ihrem Einkoppelwinkel verändert werden.
Hierbei ist es erforderlich, durch geeignete optische Umlenkung (nicht dargestellt) die auf die Elemente 11,12 auftreffenden Teilstrahlen Tₑ, Tₘ zueinander im wesentlichen parallel zu führen.

Fig.5 zeigt eine weitere Methode der Winkelverstellung der eingekoppelten Lichtstrahlen. Die durch Linsen 22 aufgeweiteten Lichtstrahlenbündel Tₑ,Tₘ leuchten den Querschnitt der Linsen 13,14 voll aus. Diesen sind steuerbare Spaltblenden 20, 21 nachgeordnet, die jeweils nur ein Teilstrahlenbündel passieren lassen, das je nach Blendenstellung einen veränderlichen Einkoppelwinkel hat.
Diese steuerbaren Spaltblenden können sowohl mechanisch als auch als LCD-Einheiten ausgeführt sein, bzw. als linear mechanisch verstellbare Blenden oder Filter mit ortsveränderlicher Transmissionscharakteristik.

Über die Veränderung der Brennweite der Linsen 13,14 und/oder die Spaltbreite oder ein variables optisches System wird die Einstellung der Fokusgröße in der Sensorebene vorgenommen.
Durch die Abmessungen und die Form des Spaltes wird die Form des Fokus beeinflußt, Zum Ausgleich der in zueinander senkrechte Richtungen unterschiedlichen Fokusgröße wird in den Strahlengang vor der Spaltblende eine Korrektionsoptik. beispielsweise eine zylindrische Optik, eingefügt oder die Linsen 13.14 sind entsprechend ausgebildet.

Der Lichtquelle 3 kann auch ein entsprechendes Strahlformungssystem zur Anpassung der Strahlparameter nachgeordnet sein, das aus einer oder mehreren abbildenden Elementen besteht, die reflektiv, refraktiv, holografisch oder als Fresnellinsen ausgebildet sein können.

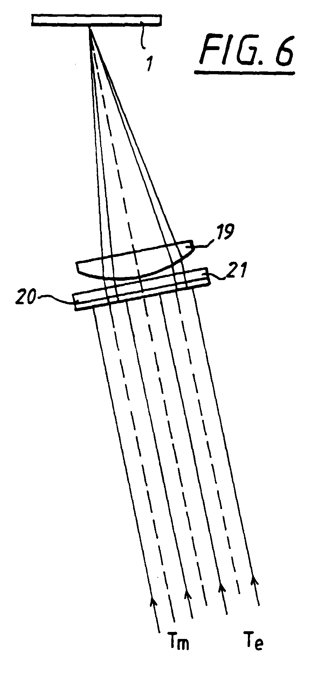

In Fig. 6 sind die Linsen 13,14 aus Fig. 5 durch eine gemeinsame Linse 19 ersetzt, wobei die Blenden 20,21 in einer gemeinsamen Anordnung, jedoch getrennt ansteuerbar, vorgesehen sind.
Analog Fig.4 werden hier zueinander im wesentlichen parallele Teilstrahlenbündel Tₑ,Tₘ durch geeignete optische Mittel erzeugt und durchlaufen die Linse 19.

Fig.7 zeigt vergrößert die in Fig.2 dargestellte Abbildung der ausgekoppelten Strahlanteile Tₑₐ und Tₘₐ auf einen ortsauflösenden Empfänger 18.
Als Meßgröße wird, wie bekannt, die Änderung des räumlichen Interferenzmusters von Tₑ und Tₘ Mode aufgenommem und ausgewertet.

Das am Austrittsort entstandene Interferenzbild der ausgekoppelten Lichtstrahlanteile wird über zylindrische Spiegel 23,24 sowie sphärische Spiegel 25,26 als in der Zeichenebene vergrößertes Abbild auf den Zeilenempfänger projiziert.
Die zylindrischen Spiegel bewirken gleichzeitig eine Verkleinerung des Interferenzbildes senkrecht zur Zeichenebene und damit eine optimale Anpassung an die Detektor-Geometrie.

Die optische Abbildung auf die Empfängerzeile kann auch mit einem Linsensystem oder einer Kombination aus refraktiver und reflektiver abbildender Optik realisiert werden.
Die refraktiven Elemente können als holografische Elemente oder Fresnellinsen ausgeführt werden, die unterschiedliche Abbildungseigenschaften in verschiedenen Richtungen haben können. Dadurch kann eine Anpassung an die Zeilengeometrie erzielt werden.

Vor dem Detektor 18 ist ein Polarisationsfilter 16 anzubringen, welcher die für das Meßverfahren notwendige Interferenz der ausgekoppelten Moden bewirkt.
Weiterhin kann zur Unterdrückung von Fremdlicht ein spektral selektives Filter 17 vor dem Detektor angebracht werden.
Zwischen Sensorebene und allen optischen Bauelementen kann ein Fenster 33 zum Schutz vor Umwelteinflüssen angeordnet sein, das vorzugsweise eine beidseitig entspiegelte Platte ist.

Durch die innerhalb der Abbildungseinheit gefalteten Strahlengänge kann die Baugröße der Anordnung reduziert und der Empfänger von unerwünschter Strahlungsbeeinflussung ferngehalten werden.

Aus dem Interferenzbild auf der Zeile wird der Abstand der Interferenzlinien als Maß des Differenzwinkels zwischen den ausgekoppelten Strahlkomponenten Tₑₐ, Tₘₐ bestimmt, der wiederum durch die auf dem Schichtwellenleiter 1 befindliche Untersuchungssubstanz und ihre Brechzahl beeinflußt wird.

Durch die innerhalb der Abbildungseinheit gefalteten Strahlengänge kann die Baugröße der Anordnung reduziert und der Empfänger von unerwünschter Strahlungsbeeinflussung ferngehalten werden.

Durch Ausbildung der optischen Elemente aus Quarzglas, verbunden mit einem mechanischen Träger aus bezüglich seines Ausdehnungskoeffizienten angepaßtem Material, beispielsweise Invar, wird für des Abbildungsteil 15 eine hohe thermische Stabilität der Vergrößerung erreicht.

Die abbildenden optischen Elemente werden in den Trägerblock 31 aufgenommen, der Bohrkanäle 32 für die optischen Strahlengänge aufweist.
Zur Kompensation von thermischen Beeinflussungen der auf der Zeile abgebildeten Interferenzstruktur und des Empfängers 18 ist eine Buchse 34 aus einem Material mit geeignet vorgewähltem Ausdehnungskoeffizienten zwischen Trägerblock 31 und Empfänger 18 angeordnet.
Der Ausdehnungskoeffizient der Buchse 24 bestimmt sich aus der Differenz des Ausdehnungskoeffizienten der abbildenden Elemente und des Trägerblocks 31 sowie dem Längenverhältnis der in dem Trägerblock 31 und in den Bohrungen verlaufenden Lichtstrahllängen.
Dies wird ergänzend anhand von Fig.7a erläutert:
Zwei Bauteile 34 und 35 unterschiedlichen Materials, die nur an den Punkten 36 und 37 miteinander verbunden sind, sind ansonsten gegeneinander beweglich.
Durch die gegenläufige thermische Ausdehnung der Bauteile 34 und 35 ist es möglich, einen bestimmten " effektiven" thermischen Ausdehnungskoeffizienten für die gesamte Halterung durch Wahl der Einzellängen und einzelnen Ausdehnungskoeffizienten einzustellen. Somit kann eine thermische Drift zwischen optischen Bauteilen und Gehäuse gegen den Detektor praktisch vollständig kompensiert werden.

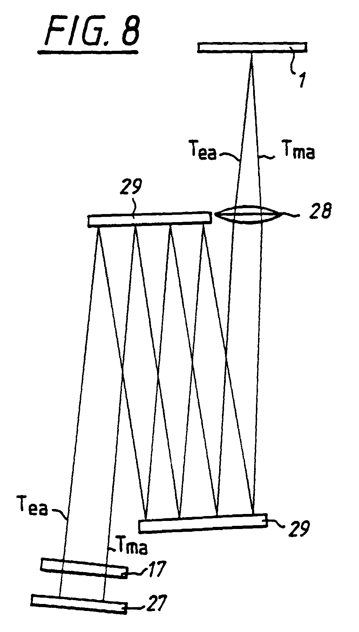

Wird die Änderung des Differenzwinkels ϕ der ausgekoppelten Strahlmoden nicht über das Interferenzbild bestimmt, ist wie in Fig.8 ein positionsempfindlicher Detektor 27 vorgesehen, auf den über eine Linse 28 und ein Spiegelsystem 29 abgebildet wird, wobei der Detektor 27 im Abstand der Brennweite von der Linse 28 entfernt ist. Anhand der Differenz der Position der Auftreffpunkte wird die Winkeldifferenz bestimmt.

Die Linse 28 kann auch durch mehrere Linsen ersetzt werden, die auch als holografische Elemente oder Fresnellinsen ausgebildet sein können.

In einer alternativen Ausgestaltung des Auskoppelstrahlenganges wird für beide ausgekoppelte Lichtfelder ein Fokus in der Detektorebene erzeugt.
Zur Auswertung werden Änderungen des Abstandes der beiden Foki herangezogen. Hierzu ist in Fig. 8 ein positionsempfindlicher Detektor 27 vorgesehen, auf den über eine Linse 28 und ein Spiegelsystem 29 abgebildet wird, wobei der Detektor im Abstand der Brennweite von der Linse 28 entfernt ist.
In einem weiter möglichen Auskoppelstrahlengang wird das
austretende Licht durch eine Linse auf einen
ortsempfindlichen Detektor fokussiert, wobei in dieser
Ausführungsform des Auskoppelstrahlengangs der TE- und
der TM- Mode je einen Fokus in der Detektorebene erzeugt und zur Auswertung des Abstands der beiden Foki auf dem Detektor die Einkoppelstrahlengänge durch geeignete optische Mittel, beispielsweise Verschlüsse, alternativ geschaltet werden.

Weiterhin können die ausgekoppelten Lichtstrahlen durch eine gemeisame oder zwei verschiedene Linsen auf zwei
ortsempfindliche Detektoren fokussiert werden. Eine ausreichende
Winkeldifferenz kann bei Verwendung eines Sensors mit
bidiffraktivem Gitterkoppler durch die Wahl der Gitterkonstanten
einfach erreicht werden. In dieser Anordnung können die Winkel
der ausgekoppelten TE- und TM-Felder parallel erfaßt werden, so
daß ein Umschalten der Einkoppelstrahlen entfallen kann, wie es
bei der vorher beschriebenen Ausführungsform notwendig ist.

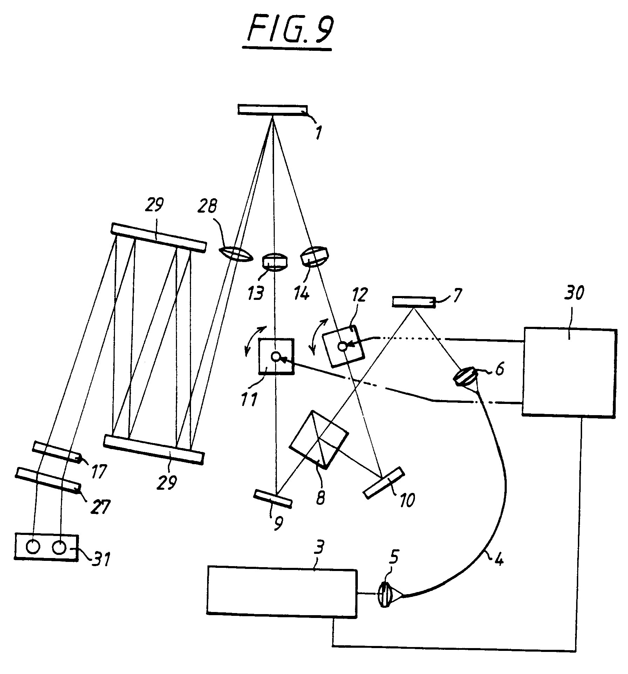

In Fig.9 werden mittels einer Ansteuereinheit 30 die strahlversetzenden Elemente 11, 12 phasensynchron betätigt.
Auf dem Empfänger erscheinen in zeitlicher Folge Bilder der einzelnen Strahlkomponenten zu den Zeitpunkten der Kopplung der Strahlmoden Tₑ und T_{m.}

Die Signaldifferenz auf dem PSD ist ein Maß für den Differenzwinkel der ausgekoppelten Strahlen.

Durch Ausbildung der optischen Elemente aus Quarzglas , verbunden mit einem mechanischen Träger aus bezüglich seines Ausdehnungskoeffizienten angepaßtem Material, beispielsweise Invar, wird für das Abbildungsteil 15 eine hohe thermische Stabilität der Vergrößerung erreicht.

Alternative Materialkombinationen mit angepaßtem thermischen Ausdehnungskoeffizienten für optische Elemente/optische Träger sind z.B. Nullausdehnungs-Glaskeramik (Zerodur), Kronglas/Grauguß, Borosilikatglas (BK7, UBK7), Kronglas/Keramik, Kronglas/Edelstahl, Kronglas/Messing.

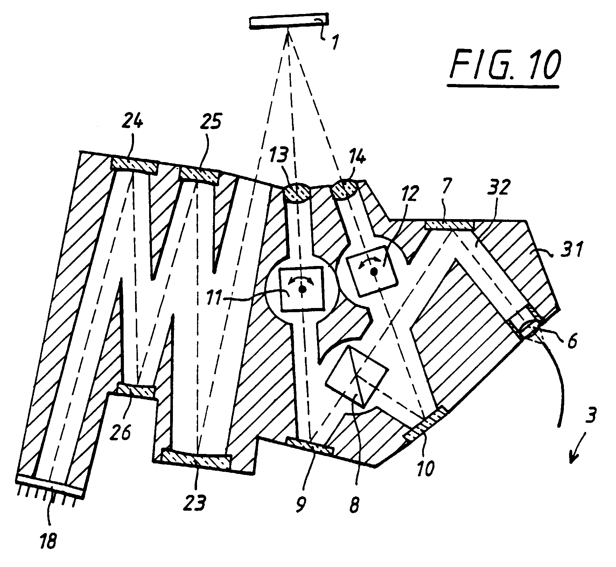

In Fig. 10 ist die Anordnung der optischen Elemente und Strahlengänge in einem geschnitten dargestellten gemeinsamen Trägerblock 31 gezeigt, der Bohrkanäle 32 für die optischen Strahlengänge aufweist.
An einem gemeinsamen Trägerblock 31 sind die optischen Elemente gemäß Fig.2 außen angebracht, vorzugsweise verkittet.
Für die optischen Strahlengänge sind jeweils Bohrungen 32 vorgesehen.
Durch die definierte Lage der optischen Bauelemente zueinander wird eine insbesondere gegen auftretende Mikrofonie äußerst stabile Anordnung erreicht.
Mit der Auswahl der Materialien für die optischen Elemente (z.B. Glas, Quarzglas) und des Trägerblocks (z.B. Zerodur, Invar, aber auch Grauguß) nach dem thermischen Ausdehnungskoeffizienten läßt sich eine optimale thermische
Stabilität der Anordnung realisieren.
Hierzu wird auf obige Ausführungen zur Materialwahl verwiesen.

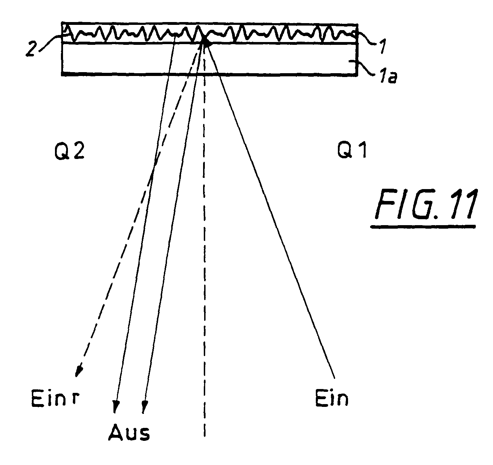

In Fig. 11 ist eine Anordnung mit einem eingekoppelten Strahl dargestellt, die für eine Absorptionsmessung geeignet ist.

### Literaturaufstellung

- [1]: K. Tiefenthaler, W. Lukosz,
" Integrated Optical Switches and Gas Sensors", Optics Letters 10, 137 (1984)
- [2]: T. Suhara, H. Nishihara,
IEEE J. Quantum Electron. 22, 845 (1986)
- [3]: W. Lukosz, K. Tiefenhaler: Patent EP 0226604
- [4]: W. Lukosz: Patent WO 8907756
- [5]: K. Tiefenthaler, W. Lukosz
" Sensivity of grating couplers as integrated-optical chemical sensors",
J. Opt. Soc. Am. 86, 209 (1989)
- [6]: K. Tiefenthaler: Patent EP 89108567
- [7]: W. Lukosz, Ph. M. Nellen, Ch. Stamm, P. Weiss,
" Output Grating Couplers on Planar Waveguides as Integrated Optical Chemical Sensors",
Sensors and Actuators, B1, 585 (1990)
- [8]: Ph. M. Nellen, W. Lukosz,
" Integrated Optical Input Grating Couplers as Chemo- and Immunosensors",
Sensors and Actuators B1, 592 (1990)
- [9]: D.S. Goldmann, P.L. White, N.C. Anheier
" Miniaturized spectrometer employing planar waveguides and grating couplers for chemical analysis",
Applied Optics 29, 4583 (1990)
- [10]: W. Lukosz
" Principles and sensivities of integrated optical und surface plasmon sensors for direkt affinity sensing and immunosensing",
Biosensors & Bioelectronics 6, 215 (1991)
- [11]: Ch. Fattinger: Patent EP 0455067
- [12]: K. Tiefenthaler Patent WO 93 014 87
EP 55 14 56
- [13]: L. W. Burgess, Jr., D. S. Goldman: Patent US 5,082,629
- [14]: D. Clerc, W. Lukosz,
"Integrated optical output grating coupler as refractometer and (bio-) chemical sensor" Sensors and Actuators B11, 461 (1993)
- [15]: Ch. Fattinger
"The bidiffracte grating coupler"
Appl. Phys. Lett. 62, 1461 (1993)
- [16]: Ch. Fattinger: Patentanmeldung CH 927/93
- [17]: A. Brandenburg, A. Fischer: EP 0482 377 A2

## Patentansprüche

1. Anordnung zur Analyse von Substanzen an oder nahe der Oberfläche eines optischen Sensors mit mindestens einer wellenleitenden Schicht und mindestens einem multidiffraktiven Gitterkoppler zur Ein- und Auskopplung von Lichtstrahlen, in den mindestens zwei Lichtstrahlen eingekoppelt werden, die zueinander einen Winkel α einschließen, mit einem Detektionssystem, das zwei aus dem Gitterkoppler ausgekoppelte, einen Winkel ϕ einschließende Lichtstrahlen erfaßt, wobei α größer als ϕ ist und Ein- und Auskopplung auf ein- und derselben Seite des Sensors erfolgen, dadurch gekennzeichnet, daß die Einkopplung der mindestens zwei Lichtstrahlen in einem Quadranten der Lichteinfallsebene erfolgt und das Detektionssystem diejenigen beiden ausgekoppelten Lichtstrahlen erfaßt, die in dem anderen Quadranten liegen.

2. Anordnung nach Anspruch 1, dadurch gekennzeichnet, daß die eingekoppelten Lichtstrahlen zueinander orthogonal polarisiert sind.

3. Anordnung nach Anspruch 1 oder 2, dadurch gekennzeichnet, daß der Winkelbereich der Auskoppelstrahlen innerhalb des Winkelbereichs liegt, der durch die am Sensor reflektierten, eingekoppelten Lichtstrahlen aufgespannt wird.

4. Anordnung nach Anspruch 1, dadurch gekennzeichnet, daß das Detektionssystem ortsauflösend ist und ein Winkel α zwischen den eingekoppelten Lichtstrahlen größer als 6 Grad vorgesehen ist.

5. Anordnung nach Anspruch 4, gekennzeichnet durch einen Winkel α zwischen den eingekoppelten Lichtstrahlen in einem Bereich von etwa 26 Grad plus/minus 20 Grad.

6. Anordnung nach Anspruch 1, gekennzeichnet durch einen Winkel ϕ zwischen den ausgekoppelten Lichtstrahlen kleiner als 6 Grad.

7. Anordnung nach Anspruch 6, gekennzeichnet durch einen Winkel ϕ zwischen den ausgekoppelten Lichtstrahlen im Bereich von etwa 0,2 bis 3 Grad.

8. Anordnung nach Anspruch 1, gekennzeichnet durch Mittel zur unabhängigen Verstellung der Einkoppelwinkel der eingekoppelten Lichtstrahlen.

9. Anordnung nach Anspruch 1, dadurch gekennzeichnet, daß ein ortsauflösendes Detektionssystem eingesetzt und ein Winkel α zwischen den eingekoppelten Lichtstrahlen größer als 3 Grad vorgesehen ist.

10. Anordnung zur Analyse von Substanzen nach Anspruch 1, dadurch gekennzeichnet, daß die eingekoppelten Lichtstrahlen sowohl in ihrem Einkoppelwinkel verstellbar als auch leicht konvergent sind.

11. Anordnung nach Anspruch 10, dadurch gekennzeichnet, daß die Winkel für beide eingekoppelten Lichtstrahlen gleichzeitig mit einem gemeinsamen Element verstellt werden oder unabhängig verstellbar sind.

12. Anordnung nach Anspruch 10, dadurch gekennzeichnet, daß der Durchmesser der eingekoppelten Lichtstrahlen in der Sensorebene im Bereich 10µm bis 1 mm liegt.

13. Anordnung nach Anspruch 1 bis 12, dadurch gekennzeichnet, daß mit dem Detektionssystem eine Lichtabsorptionsmessung an oder nahe der Oberfläche des optischen Sensors durchführbar ist.

14. Anordnung nach Anspruch 1 bis 13, dadurch gekennzeichnet, daß das Licht einer Lichtquelle zum Erzeugen der eingekoppelten Lichtstrahlen auf mindestens einen Strahlenteiler gerichtet ist und von diesem in mindestens zwei Teilstrahlen aufgespalten wird, die über eine strahlumlenkende Optik sowie strahlversetzende Einheiten und mindestens eine Abbildungseinheit in die Sensoroberfläche geführt werden.

15. Anordnung nach Anspruch 14, dadurch gekennzeichnet, daß zur Strahlteilung und zur Strahlumlenkung ein Polygonprisma vorgesehen ist, wobei mindestens eine Fläche des Polygonprismas mit einer teilweise oder vollständig reflektierenden Beschichtung versehen ist.

16. Anordnung nach einem der Ansprüche 1 bis 15, dadurch gekennzeichnet, daß eine Fokussierung der eingekoppelten Lichtstrahlen auf die Sensorebene vorgesehen ist.

17. Anordnung nach Anspruch 16, dadurch gekennzeichnet, daß zur Fokussierung abbildende Spiegel und/oder mindestens eine Linse vorgesehen ist.

18. Anordnung nach Anspruch 11, dadurch gekennzeichnet, daß die Linse oder Linsen zur Fokussierung auf die Sensorebene holografische Elemente oder Fresnellinsen sind.

19. Anordnung nach einem der Ansprüche 1 bis 18, dadurch gekennzeichnet, daß eine erste Abbildungseinheit vorgesehen ist, mit der die eingekoppelten Lichtstrahlen in einen Zwischenfokus in der Nähe einer strahlversetzenden Einheit abgebildet werden, und eine zweite strahlversetzende Einheit vorgesehen ist, mit der die Lichtstrahlen auf die Sensoroberfläche fokussiert werden.

20. Anordnung nach Anspruch 19, dadurch gekennzeichnet, daß die strahlversetzenden Einheiten drehbare Glasquader sind.

21. Anordnung nach Anspruch 19, dadurch gekennzeichnet, daß die strahlversetzenden Einheiten drehbare Spiegel sind.

22. Anordnung nach Anspruch 19, dadurch gekennzeichnet, daß die strahlversetzenden Einheiten steuerbare Spaltblenden sind, die jeweils nur einen Teil des Strahlenganges freigeben.

23. Anordnung nach Anspruch 22, dadurch gekennzeichnet, daß die Spaltblenden als LCD-Einheiten, als linear mechanisch verstellbare Blenden oder als linear mechanisch verstellbare Filter mit ortsveränderlicher Transmissions-Charakteristik ausgeführt sind.

24. Anordnung nach einem der Ansprüche 1 bis 23, dadurch gekennzeichnet, daß die optische Anordnung zur Ein- und Auskopplung in einem gemeinsamen Gehäuse enthalten ist.

25. Anordnung nach Anspruch 24, dadurch gekennzeichnet, daß eine Lichtquelle außerhalb eines die sonstige Meßanordnung enthaltendes Gehäuses angeordnet ist, wobei die Lichtquelle ein Laser oder eine Spektrallampe ist und das Licht der Lichtquelle über eine Lichtleitereinheit auf die optische Anordnung gelangt.

26. Anordnung nach Anspruch 25, dadurch gekennzeichnet, daß der Lichtquelle ein Strahlungsformungs-System zur Anpassung der Strahlparameter nachgeordnet ist, das unterschiedliche Eigenschaften parallel und senkrecht zur Einfallsebene hat.

27. Anordnung nach Anspruch 26, dadurch gekennzeichnet, daß das Strahlformungs-System aus holografischen Elementen besteht.

28. Anordnung nach einem der Ansprüche 1 bis 27, dadurch gekennzeichnet, daß für optische Elemente und Trägerelemente Bauelemente mit angepaßter thermischer Ausdehnung für einen temperaturstabilen Abbildungsmaßstab verwendet werden.

29. Anordnung nach Anspruch 14, dadurch gekennzeichnet, daß die Strahlteilung mit einem Glasfaser-Verzweigungselement erfolgt.

30. Anordnung nach einem der Ansprüche 1 bis 29, dadurch gekennzeichnet, daß das Detektorsystem für eine photoelektrische Erfassung des durch Überlagerung der ausgekoppelten Lichtstrahlen entstehenden Interferenzbildes ausgebildet ist.

31. Anordnung nach Anspruch 30, gekennzeichnet durch einen ortsauflösenden Detektor mit mindestens einem Abbildungselement, auf dem die Abbildung des Interferenzbildes erfolgt, und eine Auswerteeinheit, die mit dem ortsauflösenden Detektor verbunden ist.

32. Anordnung nach Anspruch 31, dadurch gekennzeichnet, daß der ortsauflösende Detektor ein CCD-Element ist.

33. Anordnung nach Anspruch 31, dadurch gekennzeichnet, daß das Abbildungselement mindestens eine Linse ist.

34. Anordnung nach Anspruch 31, dadurch gekennzeichnet, daß das Abbildungselement mindestens ein Spiegel ist.

35. Anordnung nach einem der Ansprüche 30 bis 34, gekennzeichnet durch eine dem Austrittsort der ausgekoppelten Lichtbündel nachgeordnete Kombination aus gefaltetem Strahlengang und abbildenden Spiegeln, die das Interferenzbild über einen Polarisator auf einen ortsauflösenden Empfänger abbildet.

36. Anordnung nach Anspruch 35, gekennzeichnet durch einen teleskopischen Abbildungsstrahlengang.

37. Anordnung nach einem der Ansprüche 1 bis 36, dadurch gekennzeichnet, daß eine Fokussierung zur Ermittlung der Position und des Winkels ϕ der ausgekoppelten Lichtstrahlen der ausgekoppelten Strahlanteile auf mindestens einen Empfänger vorgesehen ist, der mit einer Auswerteeinheit verbunden ist.

38. Anordnung nach Anspruch 37, dadurch gekennzeichnet, daß der Empfänger ein PSD ist.

39. Anordnung nach Anspruch 37, gekennzeichnet durch einen mittels Spiegeln gefalteten Abbildungastrahlengang.

40. Anordnung nach Anspruch 37, gekennzeichnet durch eine alternierende Fokussierung der ausgekoppelten Strahlungsanteile auf einen ortsauflösenden Empfänger.

41. Anordnung nach Anspruch 40, dadurch gekennzeichnet, daß die Einkoppelwinkel der eingekoppelten Lichtstrahlen zur zeitversetzten Auskopplung der Strahlkomponenten zueinander phasensynchron verstellbar sind.

42. Anordnung nach Anspruch 1 bis 41, gekennzeichnet durch einen Trägerblock, in dem mindestens ein Teil von optischen Elementen angeordnet ist.

43. Anordnung nach Anspruch 42, gekennzeichnet durch ein Trägerblockmaterial aus Invar, Zerodur oder Grauguß.

44. Anordnung nach Anspruch 42, dadurch gekennzeichnet, daß ein Teil des Trägerblocks aus einem Material, das bezüglich seiner thermischen Ausdehnung einer zu Meßfehlern führenden thermischen Ausdehnung der übrigen Trägerelemente und/oder der verwendeten Optik entgegenwirkt, ausgebildet ist.

## Claims

1. An arrangement for the analysis of substances on or near the surface of an optical sensor comprising at least one waveguiding coating and at least one multi-diffractive grating coupler for input and output coupling of light rays, into which coupler at least two light beams are input coupled with an angle α to one another, and comprising a detection system which detects two light rays output coupled from the grating coupler and including an angle φ, where α is greater than φ, and input and output coupling take place on one and the same side of the sensor, characterised in that the input coupling of the at least two light rays takes place in a quadrant of the plane of incidence of the light and the detection system detects those two output coupled light rays which are situated in the other quadrant.

2. An arrangement according to claim 1, characterised in that the input coupled light rays are polarised orthogonally relative to one another.

3. An arrangement according to claim 1 or 2, characterised in that the angle range of the output coupling rays is situated within the angle range spanned by the input coupled light rays reflected at the sensor.

4. An arrangement according to claim 1, characterised in that the detection system is position resolving and an angle α between the input coupled light rays is greater than 6°.

5. An arrangement according to claim 4, characterised by an angle α between the input coupled light rays in a range of about 26° ± 20°.

6. An arrangement according to claim 1, characterised by an angle φ between the output coupled light rays less than 6°.

7. An arrangement according to claim 1, characterised by an angle φ between the output coupled light rays in the range of about 0.2 to 3°.

8. An arrangement according to claim 1, characterised by means for independent adjustment of the input coupling angles of the input coupled light rays.

9. An arrangement according to claim 1, characterised in that a position resolving detection system is used and an angle α between the input coupled light rays of more than 3° is provided.

10. An arrangement for analysis of substances according to claim 1, characterised in that the input coupled light rays are both adjustable in their input coupling angle and also slightly convergent.

11. An arrangement according to claim 10, characterised in that the angles for the two input coupled light rays are adjusted simultaneously by a common element or are adjustable independently.

12. An arrangement according to claim 10, characterised in that the diameter of the input coupled light rays in the sensor plane is in the range of 10 µm to 1 mm.

13. An arrangement according to claims 1 to 12, characterised in that a light absorption measurement on or near the surface of the optical sensor can be performed with the detection system.

14. An arrangement according to claims 1 to 13, characterised in that the light of a light source for producing the input coupled light rays is directed on to at least one beam splitter and the latter splits the light into at least two part-rays which are guided into the sensor surface via a ray-deflecting optical system and ray-offsetting units and at least one imaging unit.

15. An arrangement according to claim 14, characterised in that a polygonal prism is provided for the beam splitting and for the ray deflection, at least one surface of the polygonal prism being provided with a partially or completely reflecting coating.

16. An arrangement according to any one of claims 1 to 15, characterised in that focusing of the input coupled light rays on to the sensor plane is provided.

17. An arrangement according to claim 16, characterised in that imaging mirrors and/or at least one lens are provided for focusing.

18. An arrangement according to claim 11, characterised in that the lens or lenses for focusing on the sensor plane are holographic elements or Fresnel lenses.

19. An arrangement according to any one of claims 1 to 18, characterised in that a first imaging unit is provided, with which the input coupled light rays are imaged in an intermediate focus in the vicinity of a ray-offsetting unit, and a second ray-offsetting unit is provided with which the light rays are focused on the sensor surface.

20. An arrangement according to claim 19, characterised in that the ray-offsetting units are rotatable glass blocks.

21. An arrangement according to claim 19, characterised in that the ray-offsetting units are rotatable mirrors.

22. An arrangement according to claim 19, characterised in that the ray-offsetting units are controllable slit diaphragms each of which releases only a part of the ray path.

23. An arrangement according to claim 22, characterised in that the slit diaphragms are constructed as LCD units, as linearly mechanically adjustable diaphragms or as linearly mechanically adjustable filters with a position-variable transmission characteristic.

24. An arrangement according to any one of claims 1 to 23, characterised in that the optical arrangement for input and output coupling is contained in a common housing.

25. An arrangement according to claim 24, characterised in that a light source is disposed outside a housing containing the rest of the measuring system, the light source being a laser or a spectral lamp and the light from the light source reaching the optical arrangement via an optical fibre.

26. An arrangement according to claim 25, characterised in that the light source is followed by a ray forming system for adapting the ray parameters, said system having different properties parallel and at right angles to the plane of incidence.

27. An arrangement according to claim 26, characterised in that the ray forming system consists of holographic elements.

28. An arrangement according to any one of claims 1 to 27, characterised in that components with adapted thermal expansion for a temperature-stable imaging scale are used for optical elements and support elements.

29. An arrangement according to claim 14, characterised in that the beam splitting is effected with a glass fibre branching element.

30. An arrangement according to any one of claims 1 to 29, characterised in that the detector system is constructed for photoelectric detection of the interference image forming by superimposition of the output coupled light rays.

31. An arrangement according to claim 30, characterised by a position resolving detector with at least one imaging element on which imaging of the interference image takes place, and an evaluation unit connected to the position resolving detector.

32. An arrangement according to claim 31, characterised in that the position resolving detector is a CCD element.

33. An arrangement according to claim 31, characterised in that the imaging element is at least one lens.

34. An arrangement according to claim 31, characterised in that the imaging element is at least one mirror.

35. An arrangement according to any one of claims 30 to 34, characterised by a combination of a folded ray path and imaging mirrors following the exit place of the output coupled light beam, said combination imaging the interference image on a position resolving receiver by a polariser.

36. An arrangement according to claim 35, characterised by a telescopic imaging ray path.

37. An arrangement according to claims 1 to 36, characterised in that a focusing system is provided to detect the position and angle φ of the output coupled light rays of the output coupled ray components on to at least one receiver connected to an evaluation unit.

38. An arrangement according to claim 37, characterised in that the receiver is a PSD.

39. An arrangement according to claim 37, characterised by an imaging ray path folded by means of mirrors.

40. An arrangement according to claim 37, characterised by an alternating focusing of the output coupled ray components on a position resolving receiver.

41. An arrangement according to claim 40, characterised in that the input coupling angles of the input coupled light rays are adjustable in phase synchronism to one another for time-staggered output coupling of the ray components.

42. An arrangement according to according to claim 1 to 41, characterised by a support block in which at least some of the optical elements are disposed.

43. An arrangement according to claim 42, characterised by a support block material consisting of Invar, Zerodur, or grey cast iron.

44. An arrangement according to claim 42, characterised in that part of the support block consists of a material which in respect of its thermal expansion counteracts such thermal expansion of the other support elements and/or of the optical system used as would result in measurement errors.

## Revendications

1. Dispositif d'analyse de substances à la surface ou au voisinage de la surface d'un capteur optique comportant au moins une couche guide d'ondes et au moins un coupleur à grille à diffraction multiple pour l'entrée et la sortie de rayons lumineux, dans lequel sont envoyés au moins deux rayons lumineux qui forment entre eux un angle (α), comportant un système de détection qui détecte deux rayons lumineux sortant du coupleur à grille et formant un angle (ϕ), α étant supérieur à ϕ et l'entrée et la sortie s'effectuant sur un seul et même côté du capteur, caractérisé en ce que l'entrée des rayons lumineux au moins au nombre de deux, s'effectue dans un quadrant du plan d'incidence de la lumière et le système de détection détecte les deux rayons lumineux en sortie qui se situent dans l'autre quadrant.

2. Dispositif selon la revendication 1, caractérisé en ce que les rayons lumineux entrants sont polarisés orthogonalement l'un par rapport à l'autre.

3. Dispositif selon la revendication 1 ou 2, caractérisé en ce que la plage angulaire des rayons sortants se situe à l'intérieur de la plage angulaire qui est définie par les rayons lumineux entrants, réfléchis sur le capteur.

4. Dispositif selon la revendication 1, caractérisé en ce que le système de détection est à résolution locale et en ce qu'il est prévu un angle α entre les rayons lumineux entrants qui est supérieur à 6 degrés.

5. Dispositif selon la revendication 4, caractérisé par un angle α entre les rayons lumineux entrants, qui se situe dans une plage comprise entre environ 26 degrés plus/moins 20 degrés.

6. Dispositif selon la revendication 1, caractérisé par un angle ϕ entre les rayons lumineux sortants inférieur à 6 degrés.

7. Dispositif selon la revendication 6, caractérisé par un angle ϕ entre les rayons lumineux sortants qui se situe dans une plage comprise entre environ 0,2 et 3 degrés.

8. Dispositif selon la revendication 1, caractérisé par des moyens pour le réglage indépendant des angles d'entrée des rayons lumineux entrants.

9. Dispositif selon la revendication 1, caractérisé en ce qu'on utilise un système de détection à résolution locale et en ce qu'il est prévu un angle α entre les rayons lumineux entrants qui est supérieur à 3 degrés.

10. Dispositif d'analyse de substances selon la revendication 1, caractérisé en ce que les rayons lumineux entrants sont réglables en ce qui concerne leur angle d'entrée et sont aussi légèrement convergents.

11. Dispositif selon la revendication 10, caractérisé en ce que les angles des deux rayons lumineux entrants sont réglés simultanément au moyen d'un élément commun ou peuvent être réglés indépendamment l'un de l'autre.

12. Dispositif selon la revendication 10, caractérisé en ce que le diamètre des rayons lumineux entrants se situe dans le plan du capteur entre 10 µm et 1 mm.

13. Dispositif selon les revendications 1 à 12, caractérisé en ce qu'au moyen du système de détection, on peut procéder à une mesure de l'absorption de lumière à la surface ou au voisinage de la surface du capteur optique.

14. Dispositif selon les revendications 1 à 13, caractérisé en ce que la lumière d'une source lumineuse destinée à produire les rayons lumineux entrants est dirigée sur au moins un diviseur de rayons et est divisée par celui-ci en au deux moins deux rayons partiels qui sont guidés dans la surface du capteur par l'intermédiaire d'au moins une optique déviant les rayons, ainsi que par des unités décalant les rayons et au moins une unité de reproduction.

15. Dispositif selon la revendication 14, caractérisé en ce qu'un prisme polygonal est prévu pour la division et la déviation des rayons, une surface au moins du prisme polygonal étant pourvue d'un revêtement réfléchissant partiellement ou totalement.

16. Dispositif selon les revendications 1 à 15, caractérisé en ce qu'une focalisation des rayons lumineux entrants est prévue sur le plan du capteur.

17. Dispositif selon la revendication 16, caractérisé en ce que pour la focalisation sont prévus des miroirs de reproduction et/ou au moins une lentille.

18. Dispositif selon la revendication 17, caractérisé en ce que la ou les lentilles pour la focalisation sur le plan du capteur est ou sont des éléments holographiques ou des lentilles de Fresnel.

19. Dispositif selon les revendications 1 à 18, caractérisé en ce qu'il est prévu une première unité de reproduction au moyen de laquelle les rayons lumineux entrants sont reproduits dans un foyer intermédiaire à proximité d'une unité de décalage des rayons et en ce qu'il est prévu une deuxième unité de décalage des rayons au moyen de laquelle les rayons lumineux sont focalisés sur la surface du capteur.

20. Dispositif selon la revendication 19, caractérisé en ce que les unités décalant les rayons sont des parallélépipèdes de verre rotatifs.

21. Dispositif selon la revendication 19, caractérisé en ce que les unités décalant les rayons sont des miroirs rotatifs.

22. Dispositif selon la revendication 19, caractérisé en ce que les unités décalant les rayons sont des diaphragmes à fente qui peuvent être commandés et qui ne dégagent chaque fois qu'une partie du parcours des rayons.

23. Dispositif selon la revendication 22, caractérisé en ce que les diaphragmes à fente sont réalisés sous la forme d'unités LCD, sous la forme de diaphragmes réglables linéairement ou mécaniquement ou sous la forme de filtres réglables linéairement et mécaniquement avec caractéristique de transmission variable localement.

24. Dispositif selon l'une des revendications 1 à 23, caractérisé en ce que le dispositif optique pour l'entrée et la sortie est enfermé dans un boîtier commun.

25. Dispositif selon la revendication 24, caractérisé en ce qu'une source lumineuse est disposée à l'extérieur d'un boîtier contenant le reste du dispositif de mesure, la source lumineuse étant un laser ou une lampe spectrale et la lumière de la source lumineuse parvenant sur le dispositif optique, par l'intermédiaire d'une unité guide de lumière.

26. Dispositif selon la revendication 25, caractérisé en ce qu'en aval de la source lumineuse est monté un système de formage de rayonnement pour l'adaptation des paramètres des rayons, qui présente des propriétés différentes parallèlement et perpendiculairement au plan d'incidence.

27. Dispositif selon la revendication 26, caractérisé en ce que le système de formage de rayons est constitué d'éléments holographiques.

28. Dispositif selon l'une des revendications 1 à 27, caractérisé en ce que pour des éléments optiques et des éléments de support, on utilise des composants de dilatation thermique adaptée pour une échelle de reproduction thermiquement stable.

29. Dispositif selon la revendication 14, caractérisé en ce que la division des rayons s'effectue au moyen d'un élément de ramification en fibres de verre.

30. Dispositif selon l'une des revendications 1 à 29, caractérisé en ce que le système de détection est conçu pour une détection photoélectrique de l'image d'interférences qui se forme par superposition des rayons lumineux sortants.

31. Dispositif selon la revendication 30, caractérisé par un détecteur à résolution locale avec au moins un élément de reproduction sur lequel s'effectue la reproduction de l'image d'interférence, et par une unité d'exploitation qui est reliée au détecteur à résolution locale.

32. Dispositif selon la revendication 31, caractérisé en ce que le détecteur à résolution locale est un élément CCD.

33. Dispositif selon la revendication 31, caractérisé en ce que l'élément de reproduction est au moins une lentille.

34. Dispositif selon la revendication 31, caractérisé en ce que l'élément de reproduction est au moins un miroir.

35. Dispositif selon l'une des revendications 30 à 34, caractérisé par une combinaison, disposée après l'emplacement de sortie des faisceaux lumineux sortants, constituée d'un parcours de rayons plié et de miroirs de reproduction, qui reproduit l'image d'interférence sur un récepteur à résolution locale par l'intermédiaire d'un polarisateur.

36. Dispositif selon la revendication 35, caractérisé par un parcours télescopique des rayons de reproduction.

37. Dispositif selon l'une des revendications 1 à 36, caractérisé en ce qu'il est prévu une focalisation pour déterminer la position et l'angle ϕ des rayons lumineux sortants des parties de rayon sortantes, sur au moins un récepteur, qui est relié à une unité d'exploitation.

38. Dispositif selon la revendication 37, caractérisé en ce que le récepteur est un PSD.

39. Dispositif selon la revendication 37, caractérisé par un parcours des rayons de reproduction plié au moyen de miroirs.

40. Dispositif selon la revendication 37, caractérisé par une focalisation alternative des parties de rayonnement sortantes sur un récepteur à résolution locale.

41. Dispositif selon la revendication 40, caractérisé en ce que les angles d'entrée des rayons lumineux entrants sont réglables les uns par rapport aux autres et avec synchronisation de phase, pour la sortie décalée dans le temps des composantes des rayons.

42. Dispositif selon l'une des revendications 1 à 41, caractérisé par un bloc de support dans lequel est disposé au moins une partie des éléments optiques.

43. Dispositif selon la revendication 42, caractérisé par un matériau du bloc de support en Invar, Zérodur ou en fonte grise.

44. Dispositif selon la revendication 42, caractérisé en ce qu'une partie du bloc de support est réalisée en un matériau qui en ce qui concerne sa dilatation thermique, s'oppose à une dilatation thermique conduisant à des erreurs de mesure, des autres éléments de support et/ou de l'optique utilisée.
